# EUROPEAN PATENT SPECIFICATION

(11) **EP 4 318 247 B1**
(45) Date of publication and mention of the grant of the patent: **10.09.2025**
(21) Application number: 21945428.7
(22) Date of filing: 15.06.2021
(51) Int. Cl.: G06F 12/02, G06F 3/06

(54) **STORAGE CONTROL METHOD AND APPARATUS, STORAGE METHOD AND APPARATUS, ELECTRONIC DEVICE, AND MEDIUM**
SPEICHERSTEUERUNGSVERFAHREN UND -VORRICHTUNG, SPEICHERVERFAHREN UND -VORRICHTUNG, ELEKTRONISCHE VORRICHTUNG UND MEDIUM
PROCÉDÉ ET APPAREIL DE COMMANDE DE STOCKAGE, PROCÉDÉ ET APPAREIL DE STOCKAGE, DISPOSITIF ÉLECTRONIQUE ET SUPPORT

(43) Date of publication of application: 07.02.2024
(73) Proprietor: Huawei Technologies Co., Ltd., Shenzhen, Guangdong 518129 (CN)
(72) Inventor: HE, Biao, Shenzhen, Guangdong 518129 (CN); LI, Diangang, Shenzhen, Guangdong 518129 (CN); WANG, Fa, Shenzhen, Guangdong 518129 (CN); RU, Yifan, Shenzhen, Guangdong 518129 (CN); LIU, Yi, Shenzhen, Guangdong 518129 (CN)
(74) Representative: Körber, Martin Hans
(86) International application number: PCT/CN2021/100175
(87) International publication number: WO 2022/261836

(56) References cited:
- CN-A- 103 123 575
- CN-A- 103 366 801
- CN-A- 109 783 397
- CN-A- 111 274 010
- CN-A- 111 274 010
- US-A1- 2017 075 622
- US-A1- 2018 267 909
- US-A1- 2019 146 712

## Description

### BACKGROUND

With increasing popularity of solid-state storage, end performance degradation due to constraints on a NAND medium used in the solid-state storage has attracted great attention. Generally, the constraints on the NAND medium include: a. Data to be written into the NAND medium needs to be written strictly in an address sequence. b. To write a same address of the NAND medium again, previously written data needs to be erased and then the address is written. c. A data erase operation on the NAND is performed on a per-block basis, and a data write operation is performed on a per-page basis (a plurality of pages form a block).

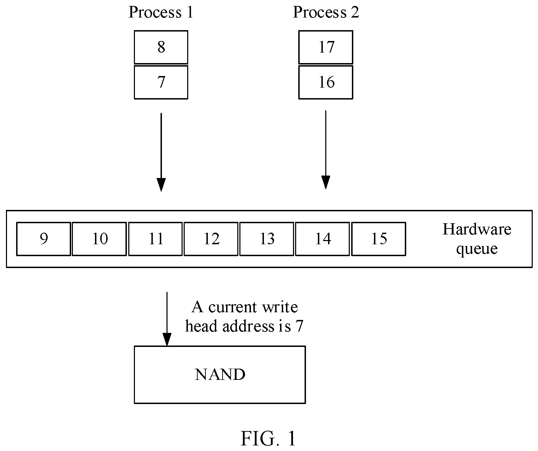

An existing file system can assign NAND storage addresses to an application in sequence. In an application scenario of a multi-core processor, IO requests received by a storage device may be out of order, and a system may be suspended. For example, as shown in FIG. 1, a current write head address of the NAND is an address 7. A process 1 first allocates an input/output (Input/Output, IO) of the address 7 and an address 8 from the file system. However, when the process 1 delivers an IO request, another process preempts CPU resources. As a result, the delivery of IO requests of the addresses 7 and 8 is delayed. At the same time, a process 2 allocates IOs of addresses 9 to 17 from the file system. When the process 2 delivers an IO request, another process does not preempt CPU resources. As a result, IO requests of addresses 9 to 15 are delivered, and the hardware queue is filled. When scanning the hardware queue, the storage device fails to find that the IO request of the address 7 exists in the hardware queue. As a result, the IO request in the hardware queue cannot be executed, and the storage device continues to wait for the IO request of the address 7. However, when the process 1 is scheduled and executed by the CPU again, the IO request of the address 7 cannot be delivered because the hardware queue is full. As a result, the system is suspended.

In the conventional technology, to resolve the problem of suspension described above, IO requests are generally delivered in a serial manner (delivered in an IO address sequence). If an IO request ranked first fails to be delivered, delivery of all subsequent IO requests is suspended. The serial delivery manner wastes hardware queue resources, affects concurrent storage bandwidth, and deteriorates user experience.

CN 111 274 010 A discloses a data control method is applied to an electronic device, where the electronic device is provided with a hardware queue.

US 2019/0146712 A1 discloses a memory system capable of translating non-linear host physical addresses into linear virtual addresses and buffering data.

### SUMMARY

The invention is defined in the independent claims. Additional features of the invention are provided in the dependent claims. In the following, parts of the description and drawings referring to embodiments which are not covered by the claims are not presented as embodiments of the invention, but are examples useful for understanding the invention.

### BRIEF DESCRIPTION OF DRAWINGS

FIG. 1 is a schematic diagram of a delivery case in which a file system delivers an IO to a hardware queue in the conventional technology;
FIG. 2 is a diagram of an application scenario of a storage sequence preserving system according to an embodiment of this application;
FIG. 3a and FIG. 3b are schematic diagrams of delivery cases in which a file system delivers an IO to a hardware queue according to an embodiment of this application;
FIG. 4 is a schematic architectural diagram of a storage sequence preserving system according to an embodiment of this application;
FIG. 5 is a schematic architectural diagram of a storage sequence preserving system according to another embodiment of this application;
FIG. 6 is a schematic flowchart of a storage control method according to an embodiment of this application;
FIG. 7 is a schematic flowchart of a storage method according to an embodiment of this application; and
FIG. 8 is a schematic diagram of a structure of a possible electronic device according to an embodiment of this application.

### DESCRIPTION OF EMBODIMENTS

To understand the foregoing objectives, features, and advantages of this application more clearly, the following describes this application in detail with reference to the accompanying drawings and specific embodiments. It should be noted that embodiments in this application and the features in embodiments may be mutually combined in the case of no conflict.

It should be noted that in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural.

For ease of understanding, descriptions of some concepts related to embodiments of this application are provided as examples for reference, as shown in the following:
A process is a running activity, for a data set, of a program with a specific independent function, and may be an instance of a running application.

A hardware queue is a queue that can be directly accessed by an ASIC (Application-Specific Integrated Circuit) associated with each physical interface, and may be used to send and receive data running in a processor core.

An input/output (IO) may refer to communication between an information processing system (for example, a computer system or a processor) and another information processing system or hardware device. Herein, "I" (input) may refer to a signal or data received by the information processing system, and "O" (output) may refer to a signal or data sent by the information processing system. For example, the processor may directly read or write a single instruction, and information transmission with the processor, for example, reading data from a hard disk. This may be referred to as an IO. An IO operation may be considered as a read/write operation performed by the processor on a memory.

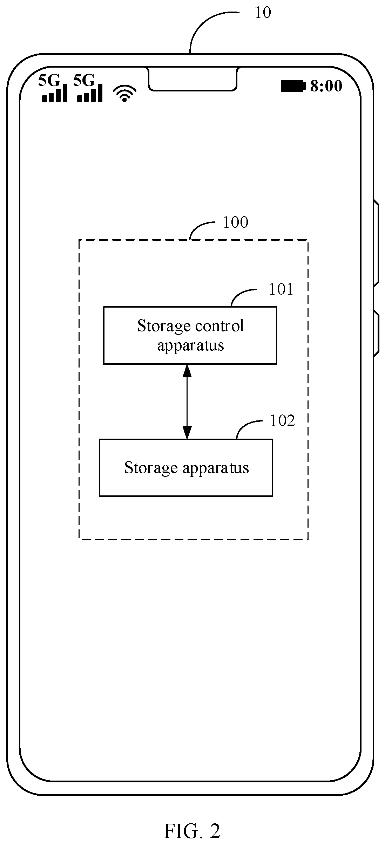

With reference to FIG. 2, the following describes an example diagram of an application scenario of a storage sequence preserving system according to an embodiment of this application.

A storage sequence preserving system 100 may include a storage control apparatus 101 and a storage apparatus 102. The storage sequence preserving system 100 may be integrated into an electronic device 10. The electronic device 10 may be a product, for example, a mobile phone, a smartwatch, a tablet computer, or a notebook computer. In FIG. 2, an example in which the electronic device 10 is a mobile phone is used for description. An operating system may be installed on the electronic device 10, and the operating system may include a file system (file system) that manages and stores file information. The file system can organize and allocate a space of a file storage device. For example, the file system can create a file for a user, store, read, modify, and dump a file, and control access of a file. The storage control apparatus 101 may include a system on chip (System on Chip, SoC), the file system may be deployed in the SoC, and a storage medium of the storage apparatus 102 may be a NAND medium (NAND flash memory).

In some embodiments, to make software on the SoC side unaware of a constraint of the NAND medium, a firmware program in the storage apparatus 102 may perform a data migration operation in the background, aggregate fragmentary valid data in an erase block together, and then perform an erase operation on the removed erase block. The file system on the SoC side also performs a similar data migration operation to sort out continuous free storage spaces for easy allocation to an application. Data migration of the file system may further cause the storage apparatus 102 to generate more data migration requirements, and cause performance of the storage apparatus 102 to deteriorate. To resolve the foregoing problem, the data migration operations of the file system and the storage apparatus 102 may be combined, and the data migration operation on the storage apparatus 102 side is moved up to the file system for execution. To implement moving the data moving operation of the storage apparatus 102 up to the file system, a physical address of the NAND medium needs to be exposed to the file system, so that logical addresses processed by the file system may be in a one-to-one correspondence with physical addresses on the storage apparatus 102 side, and the physical addresses follow a sequence of logical addresses.

For example, the logical address processed by the file system includes IO addresses d_11 to d_1n (n is an integer greater than 1) of a plurality of IOs, and the physical addresses on the storage apparatus 102 side includes a plurality of storage addresses d_21 to d_2n. An IO address d_11 corresponds to a storage address d_21, an IO address d_12 corresponds to a storage address d_22, and an IO address Ad_1n corresponds to a storage address d_2n.

In some embodiments, the IO address and the storage address may have a same address expression manner, or may have different address expression manners, and the IO address and the storage address are in a one-to-one correspondence in an address sequence. For example, the IO address and the storage address may have different prefixes or suffixes, and the IO address and the storage address have different address formats.

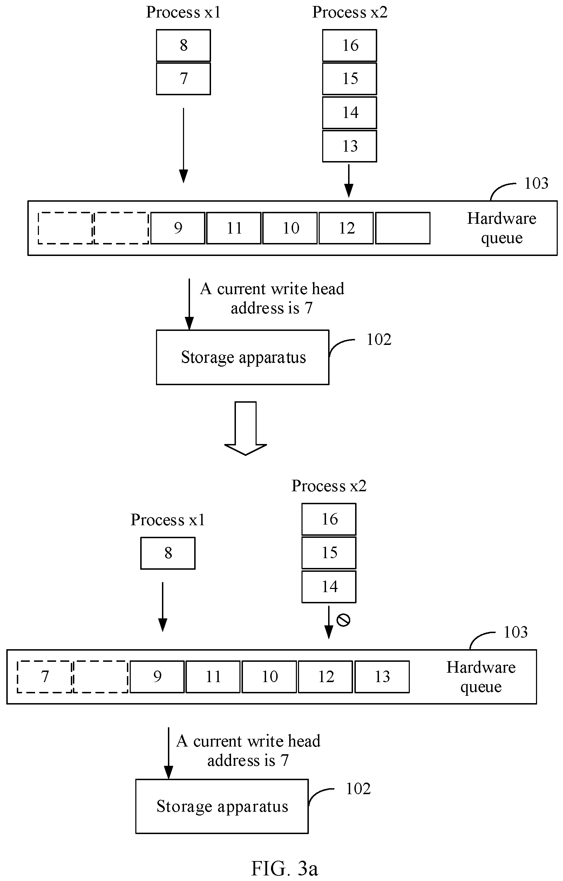

As shown in FIG. 3a, an example in which the storage control apparatus 101 executes a process x1 and a process x2 is used for description. It is assumed that a current write head address of the storage apparatus 102 is a storage address 7, the process x1 corresponds to two IOs, the process x2 corresponds to eight IOs, and a maximum quantity of IOs that the hardware queue 103 is able to contain is 7. The file system 1011 may allocate an IO address to an IO of each process in a startup sequence of the processes. For example, the process x1 is started earlier than the process x2, and a file system 1011 separately allocates an IO address 7 and an IO address 8 to two IOs of the process x1. The file system 1011 separately allocates an IO address 9, an IO address 10, an IO address 11, an IO address 12, an IO address 13, an IO address 14, an IO address 15, and an IO address 16 to the eight IOs of the process x2.

In some embodiments, at least one IO storage space may be reserved in the hardware queue 103 for a key IO. The key IO may be an IO having a key IO address, and an IO without a key IO address may be defined as a non-key IO. The key IO address may refer to a subsequent address of an IO address that is currently written into the storage apparatus 102. For example, the key IO address is an IO address next to the IO address that is currently written into the storage apparatus 102. It is assumed that the IO address that is currently written into the storage apparatus 102 is an IO address 6, that is, the key IO address is the IO address 7. The key IO address may alternatively be an IO interval address next to the IO address that is currently written into the storage apparatus 102. It is assumed that the next IO interval address includes four IO addresses, and the IO address that is currently written into the storage apparatus 102 is the IO address 6, that is, the key IO address includes the IO address 7, the IO address 8, the IO address 9, and the IO address 10.

For example, as shown in FIG. 3a, a maximum quantity of IOs that the hardware queue 103 is able to contain is seven, and two IO storage spaces (shown by dashed boxes) are reserved in the hardware queue 103 for key IOs. That is, a maximum quantity of non-key IOs that can be stored in the hardware queue 103 at any moment is 5, to prevent a system from being suspended due to non-key IOs filling up the hardware queue 103.

In some embodiments, the file system 1011 may predict a current write head address of the storage apparatus 102 by obtaining an IO address that is currently written into the storage apparatus 102. For example, the IO address that is currently written into the storage apparatus 102 is the IO address 6, that is, the IO written into the storage address 6 is the IO of the IO address 6, and the file system 1011 may predict that the current write head address of the storage apparatus 102 is the storage address 7. The key IO address may be an IO address corresponding to the current write head address of the storage apparatus 102. Because the hardware queue 103 reserves at least one IO storage space, the file system 1011 may successfully deliver the IO corresponding to the write head address to the hardware queue 103. The storage apparatus 102 may search, in a process of scanning the hardware queue 103 each time, for an IO corresponding to the current write head address in the hardware queue 103, to write the IO corresponding to the current write head address into the corresponding storage address, so that the writing of the entire IO can be performed in sequence preserving manner, the hardware queue 103 can be fully used, and system suspension can be avoided.

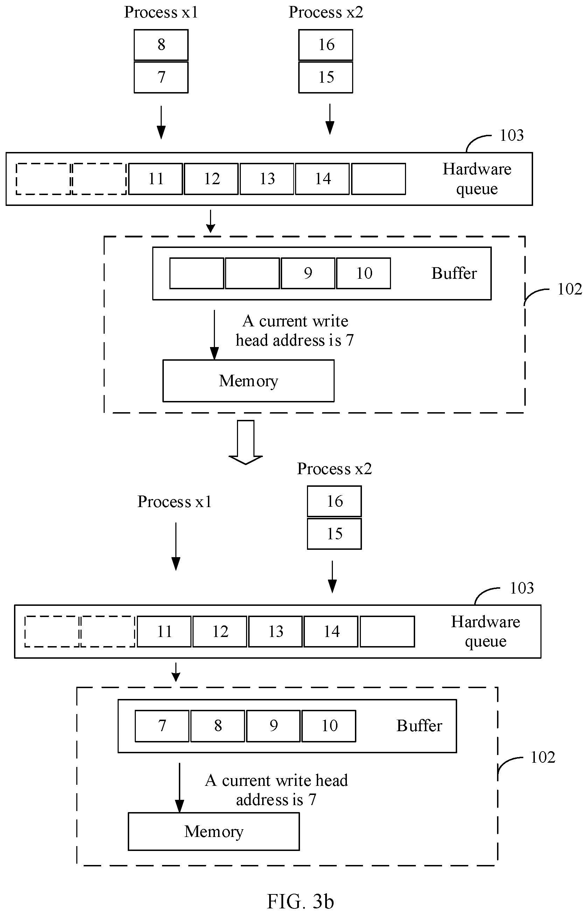

As shown in FIG. 3b, the storage apparatus 102 includes a buffer and a memory. The key IO address is an IO interval address next to the IO address that is currently written into the storage apparatus 102. A quantity of IO addresses included in the next IO interval address may be less than or equal to a quantity of IOs that the buffer is able to contain. For example, a quantity of IOs that the buffer is able to contain. shown in FIG. 3b is 4, a next IO interval address may be set to include four consecutive IO addresses, and the IO address that is currently written into the storage apparatus 102 is an IO address 6. That is, the key IO address may include an IO address 7, an IO address 8, an IO address 9, and an IO address 10. Key IOs of the IO addresses 7 to 10 may not need to be written into the buffer in the sequence of IO addresses. The key IOs may be written from the hardware queue 103 into the buffer by using a first in first out (first in first out, FIFO) policy. A plurality of key IOs stored in the buffer may be written into the memory in a sequence of the plurality of IO addresses.

In some embodiments, the hardware queue 103 may be disposed in the storage control apparatus 101 or disposed in the storage apparatus 102. For example, for a device (like a mobile phone) having a UNIX file system (UFS), the hardware queue 103 is generally disposed in the storage control apparatus 101. For a device (like a notebook computer) that does not have the UFS, the hardware queue 103 is generally disposed in the storage apparatus 102.

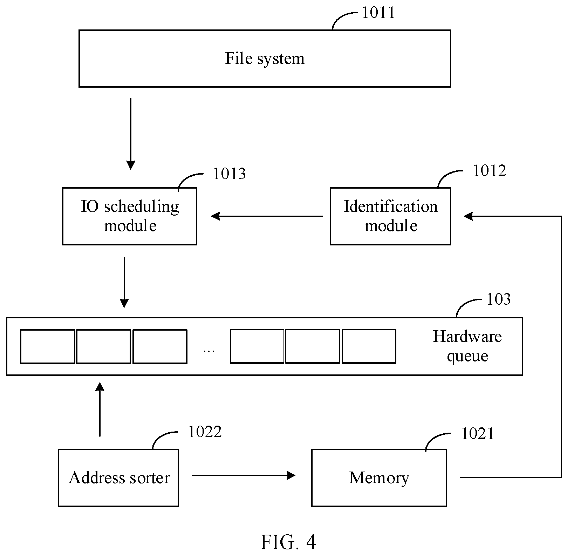

FIG. 4 is a schematic architectural diagram of a storage sequence preserving system according to an embodiment of this application.

The storage control apparatus 101 includes an identification module 1012 and an IO scheduling module 1013. The storage apparatus 102 includes a memory 1021 and an address sorter 1022. The hardware queue 103 may be disposed in the storage control apparatus 101, or disposed in the storage apparatus 102.

The identification module 1012 is configured to identify at least one key IO from a plurality of IOs.

In some embodiments, the plurality of IOs may be delivered by the file system 1011 to the identification module 1012, and a key IO address of the key IO may be a subsequent address of an IO address that is currently written into the storage apparatus 102. The identification module 1012 is further configured to monitor the IO address that is currently written into the storage apparatus 102. For example, the identification module 1012 may monitor the IO address that is currently written into the storage apparatus 102 by obtaining information that is of the IO address that is currently written into the storage apparatus 102 and that is reported by the storage apparatus 102.

For example, the key IO address is an IO address next to the IO address that is currently written into the storage apparatus 102, or an IO interval address next to an IO address that is currently written into the storage apparatus 102.

The IO scheduling module 1013 is configured to: deliver the at least one key IO to the hardware queue 103, and deliver at least one non-key IO other than the at least one key IO in the plurality of IOs to the hardware queue 103 through rate limiting.

In some embodiments, during the delivery through the rate limiting, a quantity of at least one non-key IO is less than a quantity of IOs that the hardware queue 103 is able to contain. For example, a maximum quantity of IOs that the hardware queue 103 is able to contain is 7. In a process in which the IO scheduling module 1013 delivers non-key IOs to the hardware queue 103, a quantity of non-key IOs currently stored in the hardware queue is less than 7, to prevent the non-key IOs from filling up the hardware queue 103. For example, when the quantity of non-key IOs currently stored in the hardware queue 103 is set to 6, the IO scheduling module 1013 suspends delivering the non-key IOs to the hardware queue 103. Alternatively, when the quantity of non-key IOs currently stored in the hardware queue 103 is set to 5, the IO scheduling module 1013 suspends delivering the non-key IO to the hardware queue 103.

In some embodiments, the hardware queue 103 may be divided into a specified area and a non-specified area. The specified area is used to store at least one key IO, and the non-specified area is used to store at least one non-key IO. The non-key IO may alternatively be delivered to the hardware queue 103 through rate limiting. For example, a maximum quantity of IOs that the hardware queue 103 is able to contain is 7. Two specified IO storage spaces in the hardware queue 103 are defined as specified areas, and other storage spaces are defined as non-specified areas.

The address sorter 1022 is configured to: scan the hardware queue 103 to obtain a plurality of IO addresses of the plurality of IOs, and write the plurality of IOs into a plurality of storage addresses of the memory 1021 in a sequence of the plurality of IO addresses.

In some embodiments, the plurality of storage addresses of the memory 1021 follow an IO address sequence, the plurality of IO addresses are in a one-to-one correspondence with the plurality of storage addresses, and the address sorter 1022 may write IOs in the hardware queue 103 into the memory 1021 in the IO address sequence. That is, a sequence of the IO addresses of the IOs written into the memory 1021 is the same as a sequence of the storage addresses of the memory 1021. The plurality of IOs may be delivered by the storage control apparatus 101 to the hardware queue 103. The plurality of IOs include at least one key IO, and the at least one key IO is determined by the storage control apparatus 101.

In some embodiments, when the hardware queue 103 is disposed on the storage control apparatus 101, IO information included in the hardware queue 103 may be delivered by the storage control apparatus 101 to the storage apparatus 102, and the address sorter 1022 may not need to communicate with the storage control apparatus 101. The plurality of IO addresses of the plurality of IOs in the hardware queue 103 may alternatively be obtained.

In some embodiments, the address sorter 1022 is further configured to report, to the storage control apparatus 101, information about an IO address that is currently written into the memory 1021, so that the identification module 1012 may monitor the IO address that is currently written into the storage apparatus 102.

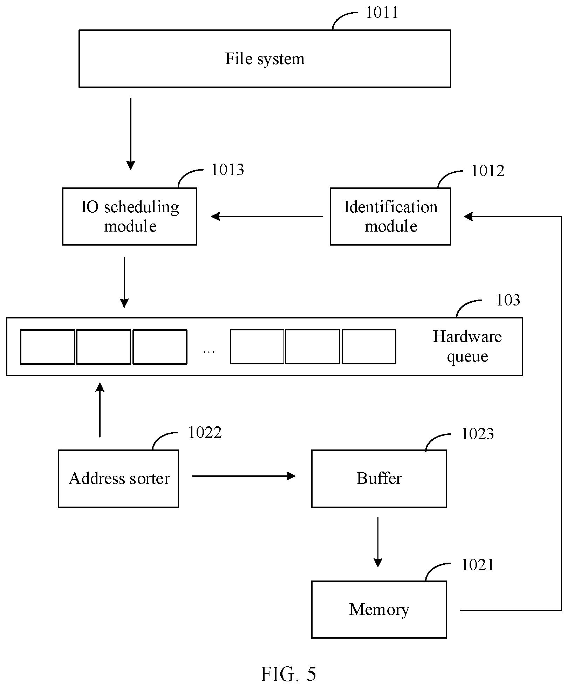

FIG. 5 is a schematic architectural diagram of a storage sequence preserving system according to another embodiment of this application.

The storage control apparatus 101 may include an identification module 1012 and an IO scheduling module 1013. The storage apparatus 102 may include a memory 1021, an address sorter 1022, and a buffer 1023.

The identification module 1012 is configured to identify at least one key IO from a plurality of IOs.

The IO scheduling module 1013 is configured to: deliver the at least one key IO to the hardware queue 103, and deliver at least one non-key IO other than the at least one key IO in the plurality of IOs to the hardware queue 103 through rate limiting.

The address sorter 1022 is configured to: scan the hardware queue 103 to obtain a plurality of IO addresses of the plurality of IOs, write the at least one key IO in the plurality of IOs into the buffer 1023, and further write the at least one key IO into a storage address of the memory in a sequence of key IO addresses.

In some embodiments, a size of the buffer 1023 may be selected based on an actual requirement. The key IO address may be an IO interval address next to the IO address that is currently written into the storage apparatus 102. A quantity of IO addresses included in the next IO interval address may be less than or equal to a quantity of IOs that the buffer 1023 is able to contain. For example, a quantity of IOs that the buffer 1023 is able to contain is 5, the next IO interval address may be set to include five consecutive IO addresses, and the IO address that is currently written into the storage apparatus 102 is an IO address 6. That is, the key IO address may include an IO address 7, an IO address 8, an IO address 9, an IO address 10, and an IO address 11. For key IOs of the IO addresses 7 to 11, the address sorter 1022 may not need to write into the buffer 1023 in a sequence of the IO addresses. The address sorter 1022 may write the key IOs from the hardware queue 103 into the buffer 1023 by using a FIFO policy. For example, an address sequence of the key IOs delivered to the hardware queue is the IO address 8, the IO address 9, the IO address 7, the IO address 11, and the IO address 10. The address sorter 1022 may sequentially write the IO at the IO address 8, the IO at the IO address 9, the IO at the IO address 7, the IO at the IO address 11, and the IO at the IO address 10 into the buffer 1023.

For the plurality of key IOs stored in the buffer 1023, the address sorter 1022 writes the plurality of storage addresses of the memory 1021 in a sequence of the plurality of IO addresses. For example, the address sorter 1022 may sequentially write the key IO at the IO address 7, the key IO at the IO address 8, the key IO at the IO address 9, the key IO at the IO address 10, and the key IO at the IO address 11 into the memory 1021.

In some embodiments, the memory 1021, the address sorter 1022, and the buffer 1023 may be integrated into one memory chip, or may be in independent chip forms. The buffer 1023 may be a buffer interval inside the memory 1021, or the buffer 1023 may alternatively be a static random-access memory (Static Random-Access Memory, SRAM). The address sorter 1022 may be a register, a programmable logic device (Programmable Logic Device, PLD), or the like.

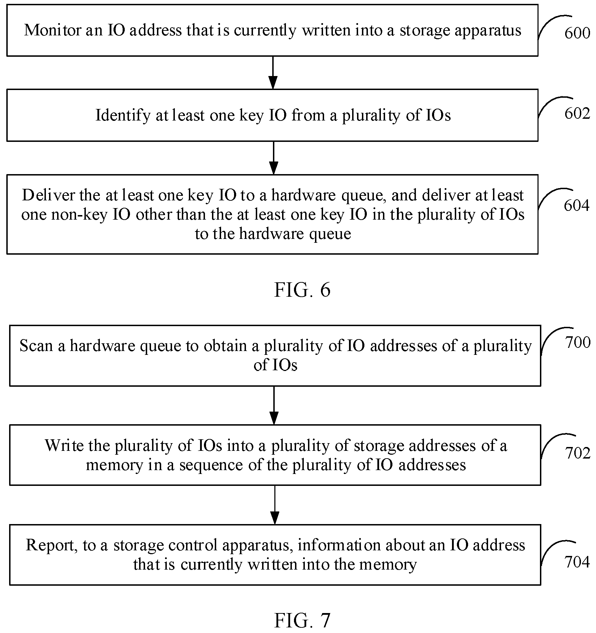

Refer to FIG. 6. A storage control method provided in an embodiment of this application may be applied to a storage control apparatus 101. According to different requirements, a sequence of steps in the flowchart may be changed, or may be omitted. This is not limited herein. In this embodiment, the storage control method may include the following steps.

600: Monitor an IO address that is currently written into a storage apparatus 102.

In some embodiments, the IO address that is currently written into the storage apparatus 102 may be monitored by obtaining information that is reported by the storage apparatus 102 and that is about the IO address that is currently written into the storage apparatus 102.

602: Identify at least one key IO from a plurality of IOs.

In some embodiments, the plurality of IOs may be delivered by a file system 1011, and a key IO address of the key IO may be a subsequent address of an IO address that is currently written into the storage apparatus 102. For example, the key IO address is an IO address next to the IO address that is currently written into the storage apparatus 102, or an IO interval address next to an IO address that is currently written into the storage apparatus 102.

604: Deliver the at least one key IO to the hardware queue 103, and deliver at least one non-key IO other than the at least one key IO in the plurality of IOs to the hardware queue 103 through rate limiting.

In some embodiments, during the delivery through the rate limiting, a quantity of at least one non-key IO is less than a quantity of IOs that the hardware queue 103 is able to contain. For example, a maximum quantity of IOs that the hardware queue 103 is able to contain is 7. In a process of delivering a non-key IO to the hardware queue 103, a quantity of non-key IOs currently stored in the hardware queue needs to be less than 7, to prevent the hardware queue 103 from being filled with the non-key IOs. For example, when the quantity of non-key IOs currently stored in the hardware queue 103 is set to 6, delivery of the non-key IOs to the hardware queue 103 is suspended. Alternatively, when the quantity of non-key IOs currently stored in the hardware queue 103 is set to 5, delivery of the non-key IOs to the hardware queue 103 is suspended.

In some embodiments, the hardware queue 103 may be divided into a specified area and a non-specified area. Step 604 may include: delivering the at least one key IO to the specified area of the hardware queue 103, and delivering the at least one non-key IO other than the at least one key IO in the plurality of IOs to the non-specified area of the hardware queue 103.

In the foregoing storage control method, the key IO in the plurality of IOs is delivered to the hardware queue, and the non-key IO is delivered to the hardware queue through rate limiting, so that the entire IO delivery queue can not only maintain a sequence for execution, but also fully utilize the hardware queue. This avoids system suspension.

Refer to FIG. 7. A storage method provided in an embodiment of this application may be applied to a storage apparatus 102. According to different requirements, a sequence of steps in the flowchart may be changed, or may be omitted. This is not limited herein. In this embodiment, the storage method may include the following steps.

700: Scan a hardware queue 103 to obtain a plurality of IO addresses of a plurality of IOs.

In some embodiments, the plurality of IOs may be delivered by the storage control apparatus 101 to the hardware queue 103.

702: Write the plurality of IOs into a plurality of storage addresses of the memory 1021 in a sequence of the plurality of IO addresses.

In some embodiments, the plurality of storage addresses of the memory 1021 follow an IO address sequence, and the plurality of IO addresses are in a one-to-one correspondence with the plurality of storage addresses. The IOs in the hardware queue 103 may be written into the memory 1021 in the sequence of the IO addresses, that is, a sequence of the IO addresses of the IOs written into the memory 1021 is the same as a sequence of the storage addresses of the memory 1021.

In some embodiments, the plurality of IOs include the at least one key IO, and the at least one key IO is determined by the storage control apparatus 101. For example, a key IO address of the at least one key IO is a subsequent address of the IO address that is currently written into the memory 1021.

In some embodiments, the storage apparatus 102 includes a buffer 1023. A size of the buffer 1023 may be selected based on an actual requirement. Step 702 may include: writing the at least one key IO into the buffer, and further writing the at least one key IO into a storage address of the memory 1021 in a sequence of key IO addresses.

When there are the plurality of key IOs and the buffer 1023 is disposed, the key IOs may not need to be written into the buffer 1023 in the sequence of the IO addresses. The key IOs may be written from the hardware queue 103 into the buffer 1023 by using a FIFO policy. For example, an address sequence of the key IOs delivered to the hardware queue is an IO address 8, an IO address 9, an IO address 7, an IO address 11, and an IO address 10. The IO at the IO address 8, the IO at the IO address 9, the IO at the IO address 7, the IO at the IO address 11, and the IO at the IO address 10 may be sequentially written into the buffer 1023.

For the plurality of key IOs stored in the buffer 1023, the plurality of storage addresses of the memory 1021 need to be written in the sequence of IO addresses. For example, the key IO at the IO address 7, the key IO at the IO address 8, the key IO at the IO address 9, the key IO at the IO address 10, and the key IO at the IO address 11 may be sequentially written into the memory 1021.

704: Report, to the storage control apparatus 101, information about the IO address that is currently written into the memory 1021.

In the foregoing storage method, the plurality of IOs may be written into the plurality of storage addresses of the memory in the sequence of the plurality of IO addresses, so that an entire IO delivery queue can not only maintain a sequence for execution, but also can fully use the hardware queue. The key IOs may be written into the buffer in an out-of-order manner, and the plurality of IOs in the buffer are written into the memory in the address sequence, so that storage performance can be improved.

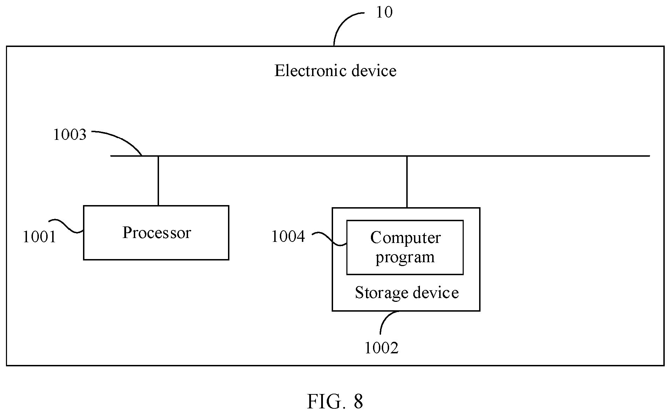

FIG.8 is a schematic diagram of a hardware structure of an electronic device 10 according to an embodiment of this application. The electronic device 10 may include a processor 1001, a storage device 1002, and a communication bus 1003. The storage device 1002 is configured to store one or more computer programs 1004. The one or more computer programs 1004 are configured to be executed by the processor 1001. The one or more computer programs 1004 include instructions, and the instructions may be used to perform, in the electronic device 10, the storage control method shown in FIG. 6 or the storage method shown in FIG. 7.

It may be understood that a structure shown in this embodiment does not constitute a specific limitation on the electronic device 10. In some other embodiments, the electronic device 10 may include more or fewer components than those shown in the figure, or some components may be combined, or some components may be split, or different component arrangements may be used.

The processor 1001 may include one or more processing units. For example, the processor 1001 may include an application processor (application processor, AP), a modulator, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 1001, and is configured to store instructions and data. In some embodiments, the memory in the processor 1001 is a cache memory. The memory may store instructions or data that have or has been used or cyclically used by the processor 1001. If the processor 1001 needs to use the instructions or the data again, the processor 1001 may directly invoke the instructions or the data from the memory. This avoids repeated access, reduces waiting time of the processor 1001, and improves system efficiency.

In some embodiments, the processor 1001 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, the storage device 1002 may include a high-speed random access memory, and may further include a nonvolatile memory, for example, a hard disk, a memory, a plug-connected hard disk, a smart media card (Smart Media Card, SMC), a secure digital (Secure Digital, SD) card, a flash card (Flash Card), at least one magnetic disk storage device, a flash memory device, or another volatile solid-state storage device.

This embodiment further provides a computer storage medium. The computer storage medium stores computer instructions. When the computer instructions are run on an electronic device, the electronic device is enabled to perform the foregoing related method steps, to implement the storage control method or the storage method in the foregoing embodiment.

This embodiment further provides a computer program product. When the computer program product runs on a computer, the computer is enabled to perform the foregoing related steps, to implement the storage control method or the storage method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the storage control method or the storage method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is an example. For example, division into the modules or units is logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. A part displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application, the scope of the invention is defined by the appended claims.

## Claims

1. A storage control apparatus, comprising:
an identification module (1012), configured to identify at least one key IO from a plurality of input/outputs, IOs, wherein a key IO address of the at least one key IO is a subsequent address of an IO address that is currently written into a storage apparatus; and
an IO scheduling module (1013), configured to deliver the at least one key IO to a hardware queue (103), and deliver at least one non-key IO other than the at least one key IO in the plurality of IOs to the hardware queue (103) through rate limiting, wherein during the delivery through the rate limiting, a quantity of the at least one non-key IO is less than a quantity of IOs that the hardware queue (103) is able to contain;
wherein the identification module (1012) is further configured to monitor the IO address that is currently written into the storage apparatus.

2. The storage control apparatus according to claim 1, wherein the hardware queue (103) comprises a specified area and a non-specified area, the specified area is used to store the at least one key IO, and the non-specified area is used to store the at least one non-key IO.

3. The storage control apparatus according to claims 1 or 2, wherein the hardware queue (103) is disposed in the storage control apparatus or disposed in the storage apparatus.

4. A storage control method, comprising:
identifying (601) at least one key IO from a plurality of IOs, wherein a key IO address of the at least one key IO is a subsequent address of an IO address that is currently written into a storage apparatus; and
delivering (602) the at least one key IO to a hardware queue, and delivering at least one non-key IO other than the at least one key IO in the plurality of IOs to the hardware queue (103) through rate limiting, wherein
during the delivery through the rate limiting, a quantity of the at least one non-key IO is less than a quantity of IOs that the hardware queue (103) is able to contain;
wherein the storage control method further comprises:
monitoring (600) the IO address that is currently written into the storage apparatus.

5. The storage control method according to claim 4, wherein the hardware queue (103) comprises a specified area and a non-specified area, and the delivering the at least one key IO to a hardware queue, and delivering at least one non-key IO other than the at least one key IO in the plurality of IOs to the hardware queue (103) through rate limiting comprises:
delivering the at least one key IO to the specified area; and
delivering the at least one non-key IO to the non-specified area.

6. A storage apparatus, comprising:
a memory (1021); and
an address sorter (1022), configured to: scan a hardware queue (103) to obtain a plurality of IO addresses of a plurality of IOs, and write the plurality of IOs into a plurality of storage addresses of the memory (1021) in a sequence of the plurality of IO addresses, wherein the plurality of storage addresses are in the IO address sequence, and the plurality of IOs are delivered by a storage control apparatus to the hardware queue;
wherein the address sorter (1022) is further configured to report, to the storage control apparatus, information about the IO address that is currently written into the memory (1021).

7. The storage apparatus according to claim 6, wherein the plurality of IO addresses are logical addresses processed by the storage control apparatus, the plurality of storage addresses are physical addresses of the memory (1021), and the plurality of IO addresses are in a one-to-one correspondence with the plurality of storage addresses.

8. The storage apparatus according to claim 6 or 7, wherein the storage apparatus further comprises a buffer, the plurality of IOs comprise at least one key IO, the at least one key IO is determined by the storage control apparatus, and a key IO address of the at least one key IO is a subsequent address of an IO address that is currently written into the memory (1021); and
the address sorter (1022) is further configured to: write the at least one key IO into the buffer, and further write the at least one key IO into the memory (1021) in a sequence of the key IO addresses.

9. A storage method, comprising:
scanning (700) a hardware queue to obtain a plurality of IO addresses of a plurality of IOs; and
writing (702) the plurality of IOs into a plurality of storage addresses of a memory (1021) in a sequence of the plurality of IO addresses, wherein
the plurality of storage addresses are in the IO address sequence, and the plurality of IOs are delivered by a storage control apparatus to the hardware queue; and
wherein the storage method further comprises:
reporting (704), to the storage control apparatus, information about the IO address that is currently written into the memory (1021).

10. The storage method according to claim 9, wherein the plurality of IO addresses are logical addresses processed by the storage control apparatus, the plurality of storage addresses are physical addresses of the memory (1021), and the plurality of IO addresses are in a one-to-one correspondence with the plurality of storage addresses.

11. The storage method according to claim 9 or 10, wherein the plurality of IOs comprise at least one key IO, the at least one key IO is determined by the storage control apparatus, a key IO address of the at least one key IO is a subsequent address of an IO address that is currently written into the memory (1021), and the writing the plurality of IOs into a plurality of storage addresses of a memory (1021) in a sequence of the plurality of IO addresses comprises:
writing the at least one key IO into a buffer; and
further writing the at least one key IO into the storage address of the memory (1021) in a sequence of the key IO addresses.

## Patentansprüche

1. Speichersteuerungsvorrichtung, umfassend:
ein Identifizierungsmodul (1012), das dazu konfiguriert ist, mindestens eine Schlüssel-E/A aus einer Vielzahl von Eingaben/Ausgaben, E/As, zu identifizieren, wobei eine Schlüssel-E/A-Adresse der mindestens einen Schlüssel-E/A eine nachfolgende Adresse einer E/A-Adresse ist, die aktuell in eine Speichervorrichtung geschrieben ist; und
ein E/A-Planungsmodul (1013), das dazu konfiguriert ist, die mindestens eine Schlüssel-E/A an eine Hardware-Warteschlange (103) zu übermitteln und mindestens eine Nicht-Schlüssel-E/A außer der mindestens einen Schlüssel-E/A in der Vielzahl von E/As durch Ratenbegrenzung an die Hardware-Warteschlange (103) zu übermitteln, wobei während der Übermittlung durch die Ratenbegrenzung eine Menge der mindestens einen Nicht-Schlüssel-E/A geringer als eine Menge von E/As ist, welche die Hardware-Warteschlange (103) zu enthalten in der Lage ist;
wobei das Identifikationsmodul (1012) ferner dazu konfiguriert ist, die E/A-Adresse, die aktuell in die Speichervorrichtung geschrieben ist, zu überwachen.

2. Speichersteuerungsvorrichtung nach Anspruch 1, wobei die Hardware-Warteschlange (103) einen vorgegebenen Bereich und einen nicht vorgegebenen Bereich umfasst, wobei der vorgegebene Bereich dazu verwendet wird, die mindestens eine Schlüssel-E/A zu speichern, und der nicht vorgegebene Bereich dazu verwendet wird, die mindestens eine Nicht-Schlüssel-E/A zu speichern.

3. Speichersteuerungsvorrichtung nach den Ansprüchen 1 oder 2, wobei die Hardware-Warteschlange (103) in der Speichersteuerungsvorrichtung angeordnet ist oder in der Speichervorrichtung angeordnet ist.

4. Speichersteuerungsverfahren, umfassend:
Identifizieren (601) von mindestens einer Schlüssel-E/A aus einer Vielzahl von E/As, wobei eine Schlüssel-E/A-Adresse der mindestens einen Schlüssel-E/A eine nachfolgende Adresse einer E/A-Adresse ist, die aktuell in eine Speichervorrichtung geschrieben ist; und
Übermitteln (602) der mindestens einen Schlüssel-E/A an eine Hardware-Warteschlange und Übermitteln von mindestens einer Nicht-Schlüssel-E/A außer der mindestens einen Schlüssel-E/A in der Vielzahl von E/As an die Hardware-Warteschlange (103) durch Ratenbegrenzung, wobei
während der Übermittlung durch die Ratenbegrenzung eine Menge der mindestens einen Nicht-Schlüssel-E/A geringer als eine Menge von E/As ist, welche die Hardware-Warteschlange (103) zu enthalten in der Lage ist;
wobei das Speichersteuerungsverfahren ferner Folgendes umfasst:
Überwachen (600) der E/A-Adresse, die aktuell in die Speichervorrichtung geschrieben ist.

5. Speichersteuerungsverfahren nach Anspruch 4, wobei die Hardware-Warteschlange (103) einen vorgegebenen Bereich und einen nicht vorgegebenen Bereich umfasst und das Übermitteln der mindestens einen Schlüssel-E/A an eine Hardware-Warteschlange und das Übermitteln von mindestens einer Nicht-Schlüssel-E/A außer der mindestens einen Schlüssel-E/A in der Vielzahl von E/As an die Hardware-Warteschlange (103) durch Ratenbegrenzung Folgendes umfasst:
Übermitteln der mindestens einen Schlüssel-E/A an den vorgegebenen Bereich und
Übermitteln der mindestens einen Nicht-Schlüssel-E/A an den nicht vorgegebenen Bereich.

6. Speichervorrichtung, umfassend:
einen Speicher (1021) und
einen Adresssortierer (1022), der zu Folgendem konfiguriert ist: Scannen einer Hardware-Warteschlange (103), um eine Vielzahl von E/A-Adressen einer Vielzahl von E/As zu erlangen, und Schreiben der Vielzahl von E/As in eine Vielzahl von Speicheradressen des Speichers (1021) in einer Sequenz der Vielzahl von E/A-Adressen, wobei sich die Vielzahl von Speicheradressen in der E/A-Adresssequenz befindet und die Vielzahl von E/As durch eine Speichersteuerungsvorrichtung an die Hardware-Warteschlange übermittelt wird;
wobei der Adresssortierer (1022) ferner dazu konfiguriert ist, der Speichersteuerungsvorrichtung Informationen über die E/A-Adresse, die aktuell in den Speicher (1021) geschrieben ist, zu melden.

7. Speichervorrichtung nach Anspruch 6, wobei die Vielzahl von E/A-Adressen logische Adressen sind, die durch die Speichersteuerungsvorrichtung verarbeitet werden, die Vielzahl von Speicheradressen physikalische Adressen des Speichers (1021) sind und die Vielzahl von E/A-Adressen in einer Einszu-eins-Entsprechung mit der Vielzahl von Speicheradressen steht.

8. Speichervorrichtung nach Anspruch 6 oder 7, wobei die Speichervorrichtung ferner einen Puffer umfasst, die Vielzahl von E/As mindestens eine Schlüssel-E/A umfasst, die mindestens eine Schlüssel-E/A durch die Speichersteuerungsvorrichtung bestimmt wird und eine Schlüssel-E/A-Adresse der mindestens einen Schlüssel-E/A eine nachfolgende Adresse einer E/A-Adresse ist, die aktuell in den Speicher (1021) geschrieben ist; und
der Adresssortierer (1022) ferner zu Folgendem konfiguriert ist: Schreiben der mindestens einen Schlüssel-E/A in den Puffer und ferner Schreiben der mindestens einen Schlüssel-E/A in den Speicher (1021) in einer Sequenz der Schlüssel-E/A-Adressen.

9. Speicherverfahren, umfassend:
Scannen (700) einer Hardware-Warteschlange, um eine Vielzahl von E/A-Adressen einer Vielzahl von E/As zu erlangen; und
Schreiben (702) der Vielzahl von E/As in eine Vielzahl von Speicheradressen eines Speichers (1021) in einer Sequenz der Vielzahl von E/A-Adressen, wobei
sich die Vielzahl von Speicheradressen in der E/A-Adresssequenz befindet und die Vielzahl der E/As durch eine Speichersteuerungsvorrichtung an die Hardware-Warteschlange übermittelt wird und
wobei das Speicherverfahren ferner Folgendes umfasst:
Melden (704), an die Speichersteuerungsvorrichtung, von Informationen über die E/A-Adresse, die aktuell in den Speicher (1021) geschrieben ist.

10. Speicherverfahren nach Anspruch 9, wobei die Vielzahl von E/A-Adressen logische Adressen sind, die durch die Speichersteuerungsvorrichtung verarbeitet werden, die Vielzahl von Speicheradressen physikalische Adressen des Speichers (1021) sind und die Vielzahl von E/A-Adressen in einer Einszu-eins-Entsprechung mit der Vielzahl von Speicheradressen steht.

11. Speicherverfahren nach Anspruch 9 oder 10, wobei die Vielzahl von E/As mindestens eine Schlüssel-E/A umfasst, die mindestens eine Schlüssel-E/A durch die Speichersteuerungsvorrichtung bestimmt wird, eine Schlüssel-E/A-Adresse der mindestens einen Schlüssel-E/A eine nachfolgende Adresse einer E/A-Adresse ist, die aktuell in den Speicher (1021) geschrieben ist, und das Schreiben der Vielzahl von E/As in eine Vielzahl von Speicheradressen eines Speichers (1021) in einer Sequenz der Vielzahl von E/A-Adressen Folgendes umfasst:
Schreiben der mindestens einen Schlüssel-E/A in einen Puffer und
ferner Schreiben der mindestens einen Schlüssel-E/A in die Speicheradresse des Speichers (1021) in einer Sequenz der Schlüssel-E/A-Adressen.

## Revendications

1. Appareil de commande de stockage, comprenant :
un module d'identification (1012), configuré pour identifier au moins une clé E/S parmi une pluralité d'entrées/sorties, E/S, dans lequel une adresse de clé E/S de l'au moins une clé E/S est une adresse ultérieure d'une adresse d'E/S qui est actuellement écrite dans un appareil de stockage ; et
un module de planification d'E/S (1013), configuré pour délivrer l'au moins une clé E/S à une file d'attente matérielle (103), et délivrer au moins une non-clé E/S autre que l'au moins une clé E/S dans la pluralité d'E/S à la file d'attente matérielle (103) via une limitation de débit, dans lequel, pendant la délivrance via la limitation de débit, une quantité de l'au moins une non-clé E/S est inférieure à une quantité d'E/S que la file d'attente matérielle (103) est capable de contenir ;
dans lequel le module d'identification (1012) est également configuré pour surveiller l'adresse d'E/S qui est actuellement écrite dans l'appareil de stockage.

2. Appareil de commande de stockage selon la revendication 1, dans lequel la file d'attente matérielle (103) comprend une zone spécifiée et une zone non spécifiée, la zone spécifiée est utilisée pour stocker au moins une clé E/S, et la zone non spécifiée est utilisée pour stocker au moins une non-clé E/S.

3. Appareil de commande de stockage selon les revendications 1 ou 2, dans lequel la file d'attente matérielle (103) est disposée dans l'appareil de commande de stockage ou disposée dans l'appareil de stockage.

4. Procédé de commande de stockage, comprenant :
l'identification (601) d'au moins une clé E/S parmi une pluralité d'E/S, dans lequel une adresse de clé E/S de l'au moins une clé E/S est une adresse ultérieure d'une adresse d'E/S qui est actuellement écrite dans un appareil de stockage ; et
la délivrance (602) de l'au moins une clé E/S à une file d'attente matérielle, et la délivrance d'au moins une non-clé E/S autre que l'au moins une clé E/S dans la pluralité d'E/S à la file d'attente matérielle (103) via une limitation de débit, dans lequel
pendant la délivrance via la limitation de débit, une quantité de l'au moins une non-clé E/S est inférieure à une quantité d'E/S que la file d'attente matérielle (103) est capable de contenir ;
dans lequel le procédé de commande de stockage comprend également :
la surveillance (600) de l'adresse d'E/S qui est actuellement écrite dans l'appareil de stockage.

5. Procédé de commande de stockage selon la revendication 4, dans lequel la file d'attente matérielle (103) comprend une zone spécifiée et une zone non spécifiée, et la délivrance de l'au moins une clé E/S à une file d'attente matérielle, et la délivrance d'au moins une non-clé E/S autre que l'au moins une clé E/S parmi la pluralité d'E/S à la file d'attente matérielle (103) via une limitation de débit comprennent :
la délivrance de l'au moins une clé E/S à la zone spécifiée ; et
la délivrance de l'au moins une non-clé E/S à la zone non spécifiée.

6. Appareil de stockage comprenant :
une mémoire (1021) ; et
un trieur d'adresses (1022), configuré pour : analyser une file d'attente matérielle (103) pour obtenir une pluralité d'adresses d'E/S parmi une pluralité d'E/S, et écrire la pluralité d'E/S dans une pluralité d'adresses de stockage de la mémoire (1021) dans une séquence de la pluralité d'adresses d'E/S, dans lequel la pluralité d'adresses de stockage sont dans la séquence d'adresses d'E/S, et la pluralité d'E/S sont délivrées par un appareil de commande de stockage à la file d'attente matérielle ;
dans lequel le trieur d'adresses (1022) est également configuré pour signaler, à l'appareil de commande de stockage, des informations sur l'adresse d'E/S qui est actuellement écrite dans la mémoire (1021).

7. Appareil de stockage selon la revendication 6, dans lequel la pluralité d'adresses d'E/S sont des adresses logiques traitées par l'appareil de commande de stockage, la pluralité d'adresses de stockage sont des adresses physiques de la mémoire (1021), et la pluralité d'adresses d'E/S sont en correspondance biunivoque avec la pluralité d'adresses de stockage.

8. Appareil de stockage selon la revendication 6 ou 7, dans lequel l'appareil de stockage comprend également une mémoire tampon, la pluralité d'E/S comprend au moins une clé E/S, l'au moins une clé E/S est déterminée par l'appareil de commande de stockage, et une adresse de clé E/S parmi l'au moins une clé E/S correspond à une adresse ultérieure d'une E/S qui est actuellement écrite dans la mémoire (1021) ; et
le trieur d'adresses (1022) est également configuré pour :
écrire l'au moins une clé E/S dans la mémoire tampon, et écrire également l'au moins une clé E/S dans la mémoire (1021) dans une séquence des adresses de clé E/S.

9. Procédé de stockage, comprenant :
l'analyse (700) d'une file d'attente matérielle pour obtenir une pluralité d'adresses d'E/S parmi une pluralité d'E/S ; et
l'écriture (702) de la pluralité d'E/S dans une pluralité d'adresses de stockage d'une mémoire (1021) dans une séquence de la pluralité d'adresses d'E/S, dans lequel
la pluralité d'adresses de stockage se trouve dans la séquence d'adresses d'E/S, et la pluralité d'E/S sont délivrées par un appareil de commande de stockage à la file d'attente matérielle ; et
dans lequel le procédé de stockage comprend également :
la signalisation (704), à l'appareil de commande de stockage, d'informations sur l'adresse d'ES qui est actuellement écrite dans la mémoire (1021).

10. Procédé de stockage selon la revendication 9, dans lequel la pluralité d'adresses d'E/S sont des adresses logiques traitées par l'appareil de commande de stockage, la pluralité d'adresses de stockage sont des adresses physiques de la mémoire (1021), et la pluralité d'adresses d'E/S sont en correspondance biunivoque avec la pluralité d'adresses de stockage.

11. Procédé de stockage selon la revendication 9 ou 10, dans lequel la pluralité d'E/S comprend au moins une clé E/S, l'au moins une clé E/S est déterminée par l'appareil de commande de stockage, une adresse de clé E/S clé parmi l'au moins une clé E/S est une adresse ultérieure d'une adresse d'E/S qui est actuellement écrite dans la mémoire (1021), et l'écriture de la pluralité d'E/S dans une pluralité d'adresses de stockage d'une mémoire (1021) dans une séquence de la pluralité d'adresses d'E/S comprend :
l'écriture de l'au moins une clé E/S dans une mémoire tampon ; et
l'écriture également de l'au moins une clé E/S dans l'adresse de stockage de la mémoire (1021) dans une séquence d'adresses de clé E/S.
